# EUROPEAN PATENT APPLICATION

(11) **EP 4 793 611 A1**
(43) Date of publication of application: **19.08.2026**
(21) Application number: 23955487.6
(22) Date of filing: 13.10.2023
(51) Int. Cl.: G01L 5/00, G01L 1/24

(54) **OPTICAL FIBER MEASUREMENT DEVICE FOR MONITORING BOLT AXIAL FORCE AND OPTICAL FIBER MEASUREMENT SYSTEM FOR MONITORING BOLT AXIAL FORCE**

(71) Applicant: Neubrex Co., Ltd., Kobe-shi, Hyogo 650-0023 (JP)
(72) Inventor: KISHIDA Kinzo, Kobe-shi, Hyogo 650-0023 (JP); YAMAUCHI Yoshiaki, Kobe-shi, Hyogo 650-0023 (JP); MA Ninshu, Suita-shi, Osaka 565-0871 (JP)
(74) Representative: Parker, Andrew James
(86) International application number: PCT/JP2023/037187
(87) International publication number: WO 2025/079239

(57) **Abstract**

An optical fiber measurement device (100) for monitoring bolt axial force includes: an optical fiber (23) to be used for measuring strain of a measurement target; a fiber attachment fixing unit (25) configured such that a nut (21) of at least one set among the plurality of sets of bolts (20) and nuts (21) has a changed shape at an outer circumferential part, and the optical fiber (23) is attached thereto, thus forming a fiber-attached nut (21S); and an optical fiber strain distribution measurement section (24) which measures a hoop strain distribution of the fiber-attached nut (21 S) occurring due to an axial force of the bolt, along the optical fiber (23) attached to an outer circumferential surface of the fiber-attached nut (21 S). Hoop strain and the hoop strain distribution of the fiber-attached nut (21S) are measured by the optical fiber strain distribution measurement section (24) in advance, and the optical fiber (23) is attached at a predetermined axial-direction position in accordance with a value of the hoop strain or the hoop strain distribution measured in advance, to monitor the bolt axial force.

## Description

### TECHNICAL FIELD

The present invention relates to an optical fiber measurement device for monitoring bolt axial force and an optical fiber measurement system for monitoring bolt axial force.

### BACKGROUND ART

As usage records of wind turbines used in wind power generation increase, problems in long-term usage are being sorted out. For example, in operation of a wind turbine facility, 20 to 30 % of all wind turbines have been broken in ten years due to dropping, flying, or the like of a blade (vane). According to analysis of reasons for the breakage, it has been found that a large proportion is occupied by loosening of bolts used at joint parts for fixing components of the wind turbine to each other, such as a joint part between the blade and a nacelle (a body to which the blade is attached) and a joint part between the nacelle and a tower (a support body for the nacelle). Regarding analysis of reasons for the breakage, reduction in the axial force applied to the bolt due to loosening of the bolt, and the like, are particularly focused on (see, for example, Non-Patent Documents 1 and 2).

Accordingly, it is necessary that occurrence of loosening (reduction in the axial force), bending fracture, and the like of a bolt is prevented and that the attachment state of a bolt at the joint part needs to be confirmed by means such as measurement of a bolt axial force through inspection or examination so that a fault as described above can be found early in a case where the fault has occurred. In order to make improvement in the condition in which loosening of a bolt occurs as described above, periodic inspection is also needed in addition to initial inspection of wind power generation equipment.

Considering the above circumstances, in recent years, guidelines for periodic inspection have been prescribed regarding an inspection method for wind power generation equipment (see Non-Patent Document 3).

Meanwhile, inspecting and confirming whether or not loosening or bending fracture of a bolt has occurred requires great cost, which is a great problem that influences profit and loss in wind power generation. The total number of bolts used at joint parts of a wind turbine as described above sometimes reaches 50 or more per joint part. Therefore, in periodic inspection, it is currently difficult to perform total inspection for the attachment states of bolts at joint parts regarding the bolt axial force and the like. In particular, for offshore equipment, access to wind power generation equipment with safety and economic efficiency taken into consideration is an urgent issued.

Among conventional technologies for measuring the bolt axial force, a technology using a wireless method is known (see, for example, Non-Patent Document 4), but in this technology, a nut that is provided with a special mechanism and is dynamically deformable in shape is used, and therefore a normal nut is not applicable. In addition, conventional management methods for axial force torque of a bolt used in wind power generation equipment cannot be adapted to the entire equipment but can merely be adapted to individual inspection (see Non-Patent Document 5).

### CITATION LIST

### NON-PATENT DOCUMENTS

Non-Patent Document 1: "Investigation Report on Bolt Damage of Units 1 and 3 at Taikoyama Wind Power Plant in Kyoto Prefecture", May 29, 2014, [online], [accessed on September 25, 2023], the Internet <URL: https://www.meti.go.jp/shingikai/sankoshin/hoan_shohi/denryoku_anzen/newenergy_hatsu den_wg/pdf/003_01_01.pdf>
Non-Patent Document 2: "Final Report on Fracture of Blade Attachment Bolts of Unit 3 at Omaezaki Wind Power Station, Chubu Electric Power Co., Inc.", July 30, 2015, [online], [accessed on September 25, 2023], the Internet <URL: https://www.meti.go.jp/shingikai/sankoshin/hoan_shohi/denryoku_anzen/newenergy_hatsu den_wg/pdf/007_04_00.pdf>
Non-Patent Document 3: "Guidelines for Periodic Inspection of Wind Power Generation Equipment", edited by Power Generation and Transformation Special Committee of General Incorporated Association Japan Electric Association, JEAG 5005-2017, pp. 11, 15, 16, 20, 22, 24, 27, 31, April 1, 2017 (First Edition)
Non-Patent Document 4: NRJ_LST Product Catalog, [online], [accessed on September 25, 2023], the Internet <URL: https://www.nord-lock.com/globalassets/mediavalet/web-assets/downloads/brochure/00297_sb_lst_4-pager-jp-web.pdf>
Non-Patent Document 5: NejiLaw Catalog, [online], [accessed on September 25, 2023], the Internet <URL: https://www.nejilaw.com/special_smartNeji.html>
Non-Patent Document 6: Technical Report "Definition of the IEA Wind 15-Megawatt Offshore Reference Wind Turbine", IEA Wind TCP Task 37, pp. 25-28, March 2020.

### PATENT DOCUMENT

Patent Document 1: Japanese Laid-Open Patent Publication JP 2010 - 216 877 A

### SUMMARY OF THE INVENTION

### PROBLEM TO BE SOLVED BY THE INVENTION

As briefly described above, the number of bolts used in conventional wind power generation equipment is 80 to 300 per blade, and therefore, if there are three blades, the number of bolts to be used reaches 200 to 900.

Regarding the bolt axial force, it is technically considered that total inspection for bolts being used is needed once every half a year, but the actual rule for wind power generation equipment used on land only prescribes inspection for 20 % of all bolts in one year.

In addition, for offshore wind power generation equipment, the cost for offshore access rises in bad weather, so that a more severe condition is imposed (the frequency of inspection decreases).

Regarding inspection accuracy in quantitative inspection, conventionally, there has been a problem that inspection accuracy for loosening of a bolt is insufficient. For example, there is a method of measuring a bolt axial force using an ultrasonic wave, but this method exhibits a measurement error of 10 % or more.

In qualitative inspection, an inspection method for loosening of a bolt is mainly based on visual recognition, at present. It is possible to use a drone for offshore access, but using a drone is essentially the same in that the measurement is based on visual recognition.

The present invention discloses technology regarding inspection and examination for wind power generation equipment, and an object of the present invention is to make it possible to provide such a configuration that a measurement system for a bolt axial force and the like, used in the inspection, can perform maintenance of itself and also can automatically inspect attachment states including axial forces, of all bolts used in components composing the wind power generation equipment, even at a long distance.

### MEANS TO SOLVE THE PROBLEM

An optical fiber measurement system for monitoring bolt axial force according to the present invention is an optical fiber measurement device for monitoring bolt axial force, configured to fix a fixation target by a fixing unit composed of a plurality of sets of bolts and nuts which are standard products, and monitor a bolt axial force occurring in the bolt using an optical fiber, the optical fiber measurement device including: an optical fiber to be used for measuring strain of a measurement target; a fiber attachment fixing unit configured such that the nut of at least one set among the plurality of sets of bolts and nuts has a shape changed so as to allow the optical fiber to be attached to an outer circumferential part of the nut, and the optical fiber is attached to the nut, thus forming a fiber-attached nut; and an optical fiber strain distribution measurement section which measures a hoop strain distribution in an axial direction of the fiber-attached nut occurring due to an axial force of the bolt, along the optical fiber attached to an outer circumferential surface of the fiber-attached nut.

Hoop strain and the hoop strain distribution along the axial direction of the fiber-attached nut are measured by the optical fiber strain distribution measurement section in advance, and the optical fiber is attached at a predetermined axial-direction position in accordance with a value of the hoop strain or the hoop strain distribution measured in advance, to monitor the bolt axial force.

### EFFECT OF THE INVENTION

The optical fiber measurement system for monitoring bolt axial force according to the present invention can perform monitoring of itself and also can automatically inspect attachment states including axial forces, of all bolts used in components composing wind power generation equipment, even at a long distance.

### BRIEF DESCRIPTION OF THE DRAWINGS

FIG. 1 is a block diagram showing an application example of an optical fiber measurement system for monitoring bolt axial force according to Embodiment 1.
FIG. 2A illustrates a component configuration of the wind turbine shown in FIG. 1.
FIG. 2B illustrates the details of a joint part between a blade and a hub inside a part C in FIG. 2A.
FIG. 3 shows an example of an optical fiber measurement device for monitoring bolt axial force according to Embodiment 1.
FIG. 4A shows an example of a nut used as a fiber attachment fixing unit of the optical fiber measurement device for monitoring bolt axial force according to Embodiment 1.
FIG. 4B shows another example of a nut used as a fiber attachment fixing unit of the optical fiber measurement device for monitoring bolt axial force according to Embodiment 1.
FIG. 4C shows another example of a nut used as a fiber attachment fixing unit of the optical fiber measurement device for monitoring bolt axial force according to Embodiment 1.
FIG. 4D shows an example of a fiber-attached nut used in the optical fiber measurement device for monitoring bolt axial force according to Embodiment 1.
FIG. 5 is a block diagram showing a configuration example of an optical fiber measurement system for monitoring bolt axial force according to Embodiment 2.
FIG. 6A is a sectional view illustrating a configuration example of a power cable used in the optical fiber measurement system for monitoring bolt axial force according to Embodiment 2.
FIG. 6B shows an optical fiber collective wire which is a component of the power cable shown in FIG. 6A.
FIG. 7A schematically shows a dual-port module used in the optical fiber measurement system for monitoring bolt axial force according to Embodiment 2.
FIG. 7B shows an example of the dual-port module used in the optical fiber measurement system for monitoring bolt axial force according to Embodiment 2.
FIG. 7C shows another example of the dual-port module used in the optical fiber measurement system for monitoring bolt axial force according to Embodiment 2.
FIG. 8A illustrates a connection method for an optical fiber and the dual-port module used in the optical fiber measurement system for monitoring bolt axial force according to Embodiment 2.
FIG. 8B shows a connection example of the optical fiber and the dual-port module used in the optical fiber measurement system for monitoring bolt axial force according to Embodiment 2.
FIG. 9 illustrates a relationship between measurement data corresponding to the placement position of an optical fiber collective wire and the dual-port module used in the optical fiber measurement system for monitoring bolt axial force according to Embodiment 2.
FIG. 10 illustrates the attachment state of the optical fiber in a case of measuring bolt axial forces collectively in the optical fiber measurement system for monitoring bolt axial force according to Embodiment 2.
FIG. 11 illustrates a data management method in the optical fiber measurement system for monitoring bolt axial force according to Embodiment 2.
FIG. 12 illustrates a testing device for measuring a hoop strain distribution occurring in a nut, to evaluate a bolt axial force.
FIG. 13 shows a relationship between hoop strain and a fiber length (a position from a reference point) of the optical fiber wound around the nut of the testing device in a case of changing the bolt axial force, measured by the testing device shown in FIG. 12.
FIG. 14 illustrates a common coordinate system for comparing the value of hoop strain measured by the testing device shown in FIG. 12 with an analysis value based on an FEM analysis model.
FIG. 15 shows comparison between the value of hoop strain measured using the testing device shown in FIG. 12 and the value of hoop strain calculated by the analysis model.
FIG. 16 shows a result of measurement of a relationship between a bolt axial force and strain in a case of changing the axial-direction position of the nut, measured by the testing device shown in FIG. 12.
FIG. 17 shows an example of measurement of a strain change amount measured by the testing device shown in FIG. 12, when the bolt axial force is increased.
FIG. 18 shows an example of measurement of a strain change amount measured by the testing device shown in FIG. 12, when the bolt axial force is decreased.
FIG. 19 shows another example of measurement of a strain change amount measured by the testing device shown in FIG. 12, when the bolt axial force is decreased.
FIG. 20 shows an example of a configuration of an optical fiber measurement system for monitoring bolt axial force according to Embodiment 3.

### DESCRIPTION OF EMBODIMENTS

The present invention relates to a measurement system for monitoring bolt axial force using an optical fiber with respect to maintenance and inspection for wind turbines including the one for offshore wind power generation. Hereinafter, the contents of the present invention will be described using representative embodiments as examples, with reference to the drawings.

### Embodiment 1

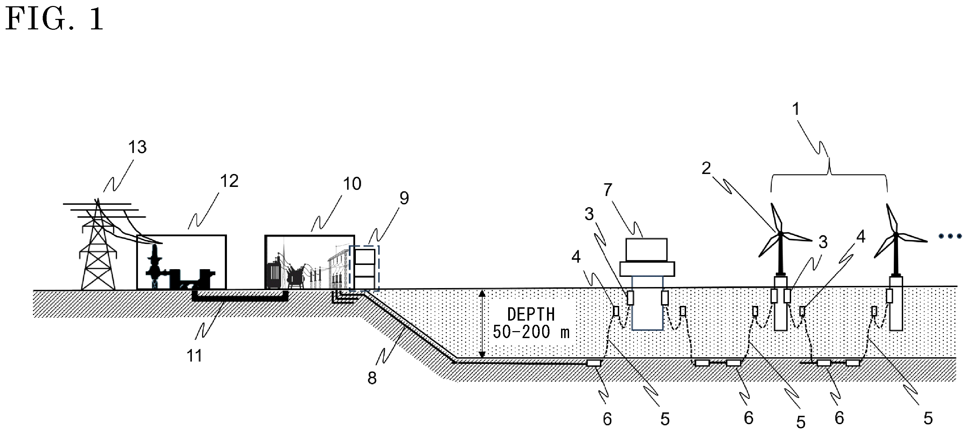

An application example of an optical fiber measurement device 100 for monitoring bolt axial force according to Embodiment 1 will be described with reference to FIG. 1 to FIG. 3.

FIG. 1 is a block diagram showing the entire configuration of wind power generation equipment and shows a usage example in offshore wind power generation which is an application example of the optical fiber measurement device 100 for monitoring bolt axial force according to Embodiment 1.

In FIG. 1, the wind power generation equipment includes: a plurality of wind turbines 1 as a floating offshore wind power site; fixing units 2 each formed by a combination (not shown) of a bolt and a nut for fixing a blade (vane) of the wind turbine 1 to a hub; a measurement optical fiber (not shown, the details thereof are described below) wound around the nut in order to dynamically (once or more per second) measure change in the axial force of the bolt; floating connection portions 3; buoys 4; dynamic cables 5 (see curves shown by dotted lines in FIG. 1) which have a length of several hundreds of meters and of which most part is provided in the sea in order to transmit a measurement signal obtained through measurement by the optical fiber to a measurement instrument station 9 provided on land via the floating connection portions 3 and the buoys 4; and the like.

A measurement signal transmitted from a floating substation 7 through the dynamic cables 5 is transmitted to the measurement instrument station 9 through cable connection portions 6 which are connection portions between static cables and the dynamic cables and are provided at the seabed, the static cables 8 (having a total length of about 30 km) provided at the seabed, and the like which are included in the wind power generation equipment.

The water depth of the ocean at which the wind turbines 1, the floating substation 7, and the like are provided is normally 50 m to 200 m, but it is also assumed that they are provided in the deep sea at a depth of 3000 m in the future.

Here, as described in detail below, the measurement instrument station 9 has a measurement signal analysis system for measuring Brillouin and Rayleigh backscattering light beams due to strain occurring in a bolt on the basis of a measurement signal for a bolt axial force measured by the optical fiber.

Thereby, a frequency shift of the optical fiber measurement signal due to strain occurring in a bolt is calculated. Thus, even in a case where temperature and strain change at the same time, the change amounts of temperature and strain can be measured as distributions along the optical fiber, in this measurement device using a Brillouin method and a Rayleigh method (see, for example, Patent Document 1).

In the above description, the case where there are a plurality of wind turbines has been described as an example. However, without limitation thereto, there may be one wind turbine. The above optical fiber may be an optical fiber provided in a power transmission line for supplying power obtained from the wind power generation equipment.

A signal regarding electric generation performed by the wind turbine 1 in the wind power generation equipment is transmitted to a substation 10 through the floating connection portions 3, the dynamic cables 5, the buoys 4, the cable connection portions 6, the floating substation 7, the static cables 8, and the like. Then, the signal passes through an underground power transmission cable 11 (having a total length of 10 km) and a switching station 12 and is transmitted to a grid 13 represented as an electric pylon. Accordingly, hereinafter, the dynamic cables 5 and the static cables 8 may be collectively referred to as a power transmission line. In this case, the power transmission line has therein an optical fiber used for both of bolt axial force measurement and a communication function.

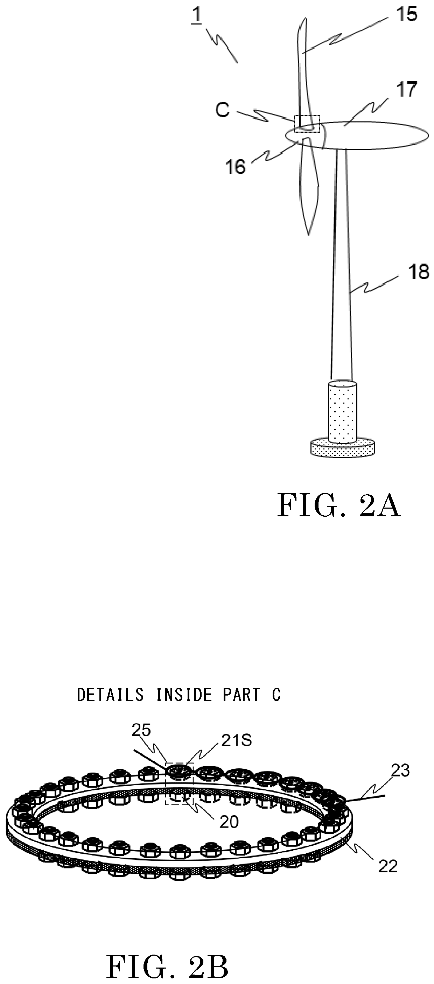

Next, a main component configuration of the wind turbine 1 of the wind power generation equipment to which the optical fiber measurement device for monitoring bolt axial force according to Embodiment 1 is applied, will be described with reference to FIG. 2A and FIG. 2B. Here, FIG. 2A illustrates a component configuration of the wind turbine shown in FIG. 1, and FIG. 2B illustrates the details of a joint part between the blade and the hub inside a part C in FIG. 2A.

As shown in FIG. 2A, in general, the wind turbine 1 is composed of four main components, i.e., blades 15 which rotate by catching wind, the hub 16 connecting the blades to a rotary shaft, a nacelle 17 in which a speed increaser, an electric generator, and the like connected through the rotary shaft to the hub 16 are stored, and a tower 18 fixing and supporting the nacelle 17.

As shown in FIG. 2B, a joining portion 22 (inside of the part C in FIG. 2A) between the blade 15 and the hub 16 is fixed using a fiber attachment fixing unit 25 (the details thereof is described below) composed of a combination of the bolt 20 and a nut 21S to which the fiber is attached as described in detail below.

Here, in the optical fiber measurement device for monitoring bolt axial force according to Embodiment 1, the joining portion 22 between the blade 15 and the hub 16, represented by two donut-shaped ring plates shown in white and black in FIG. 2B is, more specifically, fixed by being tightened using a plurality of sets of the bolts 20 and the fiber-attached nuts 21S obtained by combining the bolts 20 and the fiber-attached nuts 21S to which an optical fiber for sensing strain is attached. In this case, a fixing unit for fixing the joining portion 22 is the fiber attachment fixing unit 25. Hereinafter, the joining portion 22 may be referred to as a fixation target 22. Not only the joining portion between the blade and the hub but also a joining portion between the nacelle and the tower is referred to as a joining portion 22 (or a fixation target 22).

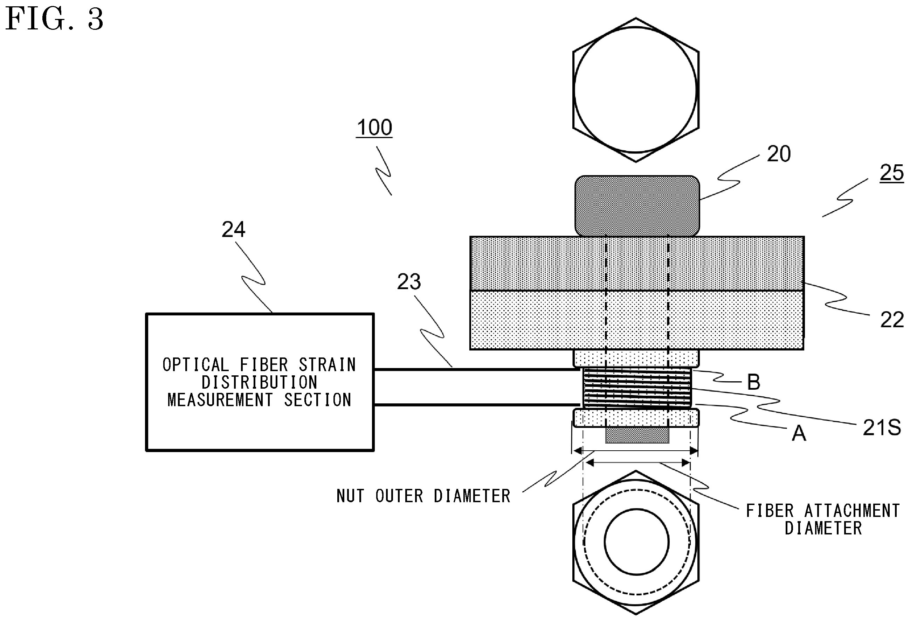

Next, a main configuration of the optical fiber measurement device 100 for monitoring bolt axial force according to Embodiment 1 will be described with reference to a conceptual diagram shown in FIG. 3.

In FIG. 3, the fixation target 22 is fixed by the fiber attachment fixing unit 25. In this case, the fixation target 22 is fixed being subjected to an axial force (which may be referred to as a bolt axial force) which is a load in the axial direction by a combination of the bolt 20 (a bolt shaft is a part indicated by a broken line) composing the fiber attachment fixing unit 25, and the fiber-attached nut 21S having such an outer-diameter shape that a fiber attachment diameter (a diameter of a fiber-wound part), i.e., a diameter at an axial-direction center part of the outer circumference is almost the same as and slightly smaller than the outer diameter of the nut.

Among the fiber attachment fixing units 25, not only a combination of the bolt 20 which is a standard product and the fiber-attached nut 21S but also a combination of the bolt 20 which is a standard product and the nut 21 which is a standard product may be partially included. A top view of the bolt 20 is shown on the upper side of the bolt 20, and a bottom view of the nut is shown on the lower side of the fiber-attached nut 21S, for reference. A circle shown by a dotted line in the bottom view indicates the fiber attachment diameter.

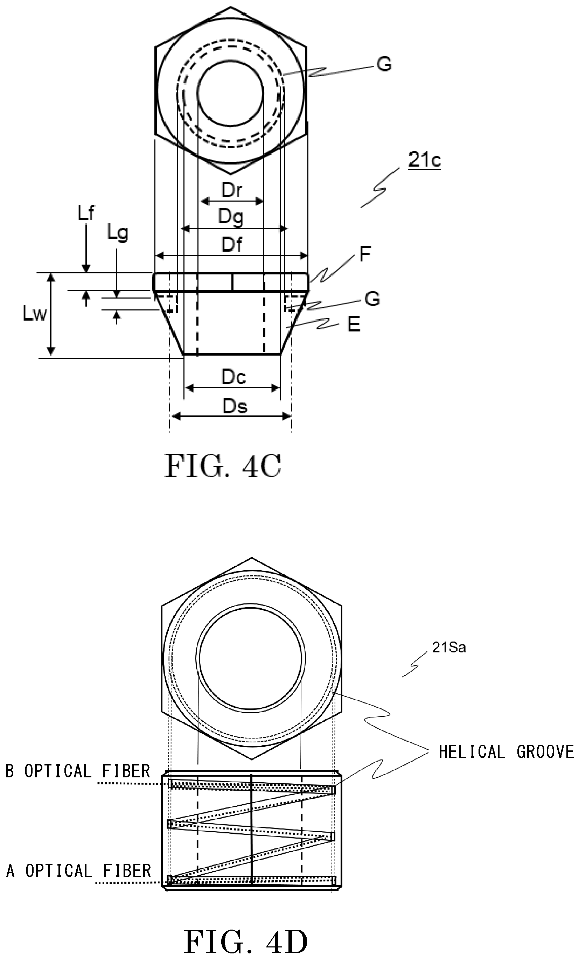

The fiber-attached nut 21S has, around the outer circumference thereof, an optical fiber 23 wound by a plurality of turns for measuring hoop strain occurring in the nut on the basis of the bolt axial force (see FIG. 4D described below). A signal measured by the wound optical fiber 23 is processed by an optical fiber strain distribution measurement section 24 based on a Rayleigh method and a Brillouin method (the optical fiber strain distribution measurement section 24 includes a processor for computation and a memory for data storage; the details thereof are described below), whereby strains at specific positions of the nut wound with the optical fiber 23 are figured out as a strain distribution. Thus, the axial force applied to the bolt is monitored.

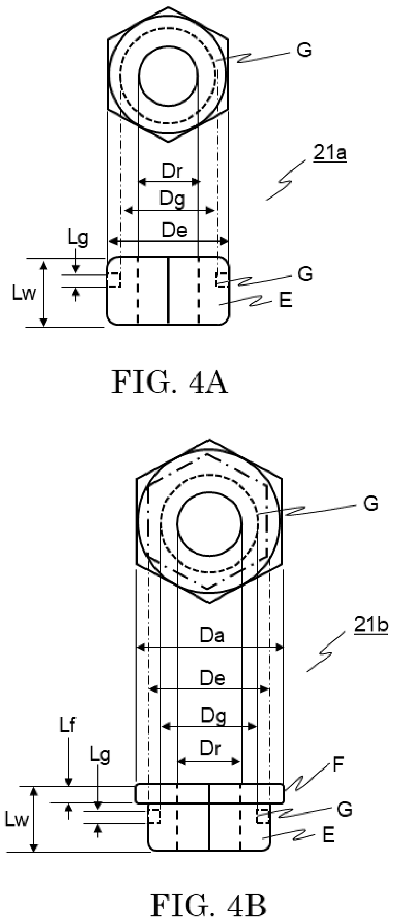

Next, the structure of the nut used for the fiber-attached nut 21S included in the fiber attachment fixing unit 25 will be described below with reference to FIG. 4A to FIG. 4D.

First, FIG. 4A illustrates the structure of a nut 21a having a shape that corresponds to a standard product (e.g., M30 nut) and is partially changed so as to be used for attaching an optical fiber (a groove described below is newly formed), a top view is shown on the upper side, and a front view is shown on the lower side. In the front view, a part indicated by reference character E is a nut body, and a part indicated by reference character G is a groove formed in the nut body, for attaching an optical fiber therein. This groove part is an only difference from the structure of the standard product nut. The groove formation position in the axial direction of the nut is an upper surface side (a surface B side contacting with the fixation target 22; see "B" in FIG. 3), of two upper and lower surfaces of the nut.

A dotted line shown in the top view indicates the bottom surface of the groove G. The outer shape (outer circumference shape) of the bottom surface of the groove G is a circular shape having a diameter Dg as shown in the drawing. As shown in the front view, the groove is formed at a position on the upper surface side of the nut and has a width Lg and a depth (De-Dg)/2. Here, De is the size of the nut, Dr is the nominal diameter of the nut, and Lw is the thickness of the nut.

Next, the structure of another nut used for the fiber-attached nut will be described below with reference to FIG. 4B to FIG. 4D. First, the nuts shown in FIG. 4B and FIG. 4C will be described.

The nuts shown in FIG. 4B and FIG. 4C each have the same thickness (Lw) as the nut 21a shown in FIG. 4A, a groove having a shape that is the same as or similar to that in FIG. 4A is formed on the surface B side contacting with the fixation target 22, and a flange part (brim part) F having a larger outer circumference size than the nut having the shape corresponding to the standard product is formed on the upper surface side ( Da, Db > De). In each nut, the thickness size of the flange part is Lf, which is smaller than the thickness size of the nut having the shape corresponding to the standard product (Lf < Lw).

A nut 21b shown in FIG. 4B has, at the lower side part, the same shape as the standard product nut except that the thickness size is small. A nut 21c shown in FIG. 4C has a truncated cone shape at the lower side part.

Since the nut 21b and the nut 21c have the flange part (brim part), it is expected that occurrence of bending fracture or the like of the bolt shaft due to hoop strain at the flange part is suppressed.

Next, a fiber-attached nut 21Sa obtained by winding a fiber around the nut 21a having a structure corresponding to FIG. 4A will be described with reference to FIG. 4D.

FIG. 4D conceptually shows the fiber-attached nut 21Sa configured such that an optical fiber is wound by a single turn or a plurality of turns over almost the entirety in the axial direction of the nut along a helical groove having a width of 1 mm and a depth of about 0.3 mm and formed around the cylindrical outer circumferential surface of the nut. A waterproof layer is formed on the surface of the optical fiber.

By using the above fiber-attached nut as the fiber attachment fixing unit, it is possible to accurately detect a positive-negative crossover position (the details thereof are described below) of a hoop strain value when the bolt axial force is loosened. As the optical fiber used for this purpose, an optical fiber of which bending resistance is great and connection loss is small is selected.

### Embodiment 2

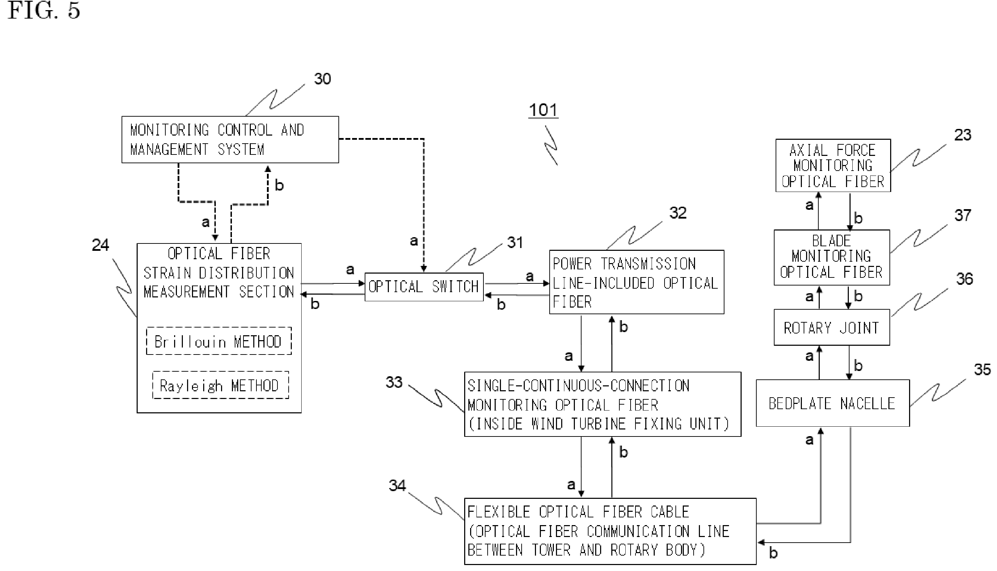

Next, a configuration example of a measurement system to which an optical fiber measurement system 101 for monitoring bolt axial force according to Embodiment 2 is applied, will be described with reference to a block diagram shown in FIG. 5. In FIG. 5, dotted-line arrows represent electric signal lines, and solid-line arrows represent optical signal lines. First, relationships between components indicated by arrows "a" will be described.

The optical fiber measurement system for monitoring bolt axial force according to the present invention includes: a monitoring control and management system 30 which is a computer having a memory and a processor for performing monitoring control, maintenance, and management of the wind power generation equipment; an optical fiber strain distribution measurement section 24 which receives a command signal from the monitoring control and management system 30 and transmits a signal for starting measurement of the axial force of the bolt which is a component of the fixing unit 2 of the wind turbine (the transmitted signal includes a signal for giving a command to measure a hoop strain distribution occurring in a specified nut among the nuts formed in the above special shape); an optical switch 31 which switches and outputs a command signal for selection control in monitoring a plurality of wind turbines, together with the signal from the optical fiber strain distribution measurement section 24, while specifying a position for measuring the axial force of the fixing unit 2 of the wind turbine; a power transmission line-included optical fiber 32 including an optical fiber which is provided in the power transmission line and to which the signal from the optical switch 31 is inputted; and a monitoring optical fiber to which the signal from the power transmission line-included optical fiber 32 is inputted and which is provided for performing measurement at specified measurement positions and is arranged in a single-continuous connection manner for all the specified measurement positions.

The signal from the single-continuous-connection monitoring optical fiber 33 is transmitted through a flexible optical fiber cable 34 for performing optical communication between the tower of the wind turbine and a rotary body such as the blade of the wind turbine, and for example, passes through a bedplate nacelle 35 which is a component connecting a fixed component and a rotary component among components of the wind turbine, and reaches a rotary joint 36 for connection to a rotating blade. Then, the signal passes through a blade monitoring optical fiber 37 and reaches the axial force monitoring optical fiber 23. Here, the bedplate nacelle 35 is a nacelle having a specific shape for improving power generation efficiency of the wind turbine.

Next, in the configuration example of the optical fiber measurement system for monitoring bolt axial force according to Embodiment 2, relationships between components indicated by arrows "b" will be described.

A signal due to hoop strain of the nut caused by the axial force applied to the bolt which is a component of the fixing unit 2 of the wind turbine is detected by the axial force monitoring optical fiber 23, and the detected signal is transmitted through the blade monitoring optical fiber 37, the rotary joint 36, the bedplate nacelle 35, the flexible optical fiber cable 34, the single-continuous-connection monitoring optical fiber 33, and the power transmission line-included optical fiber 32 in this order, and passes through the optical switch 31, thus finally reaching the optical fiber strain distribution measurement section 24.

The optical fiber strain distribution measurement section 24 which receives the signal due to hoop strain of the nut has a processor and a memory, and calculates hoop strain of a target fixing unit (fixing unit) as a monitoring target in association with necessary measurement positions by a Brillouin method or a Rayleigh method. The optical fiber strain distribution measurement section 24 stores the calculation result into the memory and transmits a necessary data signal to the monitoring control and management system 30 in accordance with a command from the monitoring control and management system 30. In the monitoring control and management system 30, data transmitted from the optical fiber strain distribution measurement section is stored and the bolt axial force is monitored on the basis of the stored data.

An example of the single-continuous-connection monitoring optical fiber 33 will be specifically described below with reference to the drawings. As described above, the number of bolts used in the wind power generation equipment is several tens or more per blade, and it cannot be said that such a large number of bolts are sufficiently inspected.

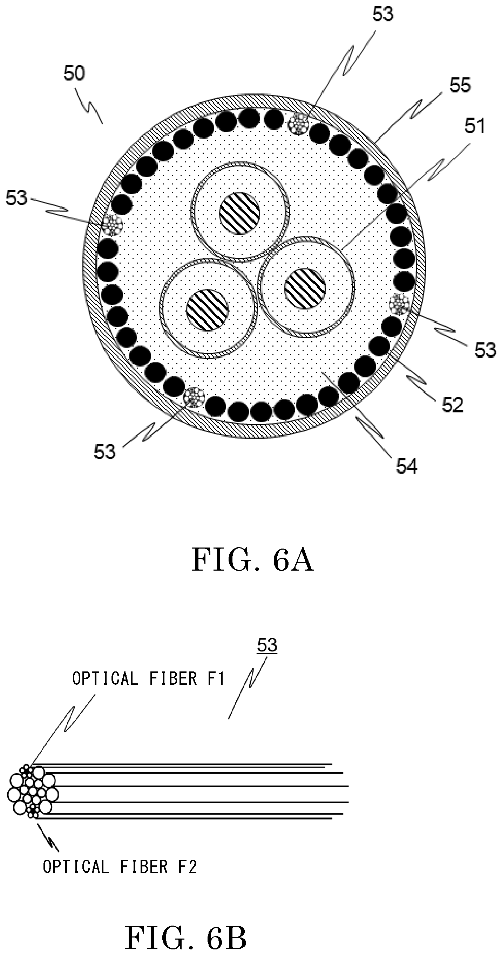

Accordingly, in order to make improvement in the above situation, it is necessary to improve the inspection method, and an optical fiber measurement system which measures bolt axial forces collectively for attaining the above purpose will be described below with reference to FIG. 6A to FIG. 11. Realizing such a system can shorten a time for inspecting bolts, and makes it possible to inspect more bolts also in periodic inspection.

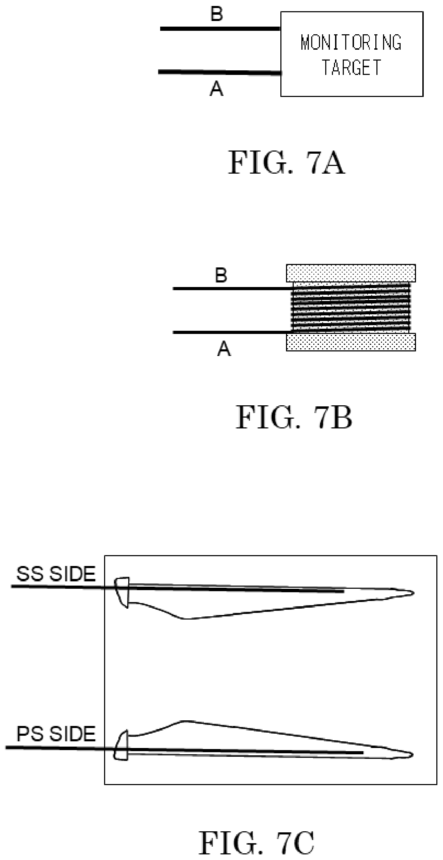

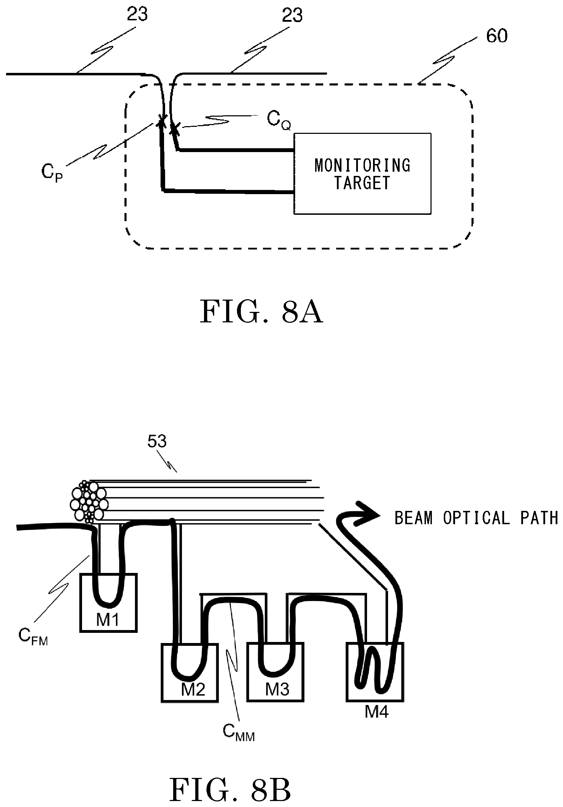

First, an example of hardware for implementing the optical fiber measurement system for monitoring bolt axial force according to the above Embodiment 2 will be described with reference to FIG. 6A to FIG. 8B. FIG. 6A and FIG. 6B illustrate an optical fiber collective wire which is a first component among main components of hardware for implementing the optical fiber measurement system for monitoring bolt axial force according to Embodiment 2. FIG. 7A, FIG. 7B, and FIG. 7C illustrate a dual-port module which is a second component among the main components of hardware. FIG. 8A and FIG. 8B show a connection method for the two main components and a representative connection example therefor.

First, an optical fiber collective wire 53 which is the first component will be described with reference to FIG. 6A and FIG. 6B. FIG. 6A is a sectional view of a power cable 50 (which may be referred to as a power transmission line 50) in which power transmission cables 51 are provided at a center part. FIG. 6B is an enlarged perspective view illustrating the detailed structure of the optical fiber collective wire 53 shown in FIG. 6A, which is described in detail below.

In FIG. 6A, in an outer circumferential part of the power cable 50, a plurality of optical fiber collective wires 53 each including a plurality of optical fibers 23 are arranged so as to be interposed between multiple armor wires 52. As shown in FIG. 6B, a plurality of optical fibers 23 (an optical fiber F1 and an optical fiber F2 shown in FIG. 6B) are provided at an outermost circumferential part of the optical fiber collective wire 53.

Next, the dual-port module which is the second component will be sequentially described with reference to FIG. 7A, FIG. 7B, and FIG. 7C.

First, FIG. 7A conceptually shows the dual-port module. In FIG. 7A, two ports Pa and Pb are connected to a monitoring target such as a nut, a blade, or a power cable separately from each other, and have features that the ports Pa and Pb can be identified by connection IDs (which may be simply referred to as IDs; here, ID is an abbreviation for identifier), the ports Pa and Pb can be distinguished by color, length, or the like, and are formed as an optical fiber having a sufficient length to allow splice, and results of Brillouin and Rayleigh measurements in a factory are provided as initial values after the optical fiber is attached.

Next, FIG. 7B shows a hoop strain measurement module using a nut, which is an example of the dual-port module, and has two different ports Pa and Pb as in the above example.

FIG. 7C shows a blade deformation measurement module which is another example of the dual-port module and has ports on a pressure side (PS side) and a suction side (SS side) of a blade of a wind turbine. The two ports are referred to as a port Pp and a port Ps.

In the optical fiber measurement system for monitoring bolt axial force shown in FIG. 5, the optical fiber collective wires and the dual-port module are connected to each other in a manner shown in FIG. 8A as described below, and the optical fiber collective wires and modules are connected and used in a manner shown in FIG. 8B, whereby monitoring can be performed on a module basis.

FIG. 8A illustrates a connection method for a monitoring target and the optical fiber in a case where a plurality of monitoring targets such as a nut, a blade, and a power cable are configured as a module and the monitoring target as a module is measured and monitored using an optical fiber as monitoring means.

In FIG. 8A, the optical fiber 23 taken out from the optical fiber collective wire having the optical fiber 23 provided at an outer circumferential part of the optical fiber collective wire, and two ports (e.g., port Pa and port Pb) of the monitoring target, are connected to each other at connection points C_{P} and C_{Q}.

Next, a specific connection example will be described with reference to FIG. 8B. In FIG. 8B, an optical fiber (see the optical fiber F2 shown in FIG. 6B) is taken out from an outer circumferential part of the optical fiber collective wire 53, and for example, connected and joined to one port of a hoop strain measurement module (module M1; see FIG. 7B) of a fiber-attached nut or the like by the connection method described above in FIG. 8A (see a connection point C_{FM} shown in FIG. 8B).

Further, the module M1 is joined to another point of the optical fiber F2 by another port of the module M1. Further, another point different from the above two points of the optical fiber F2 is joined to a module M2.

Next, another port of the module M2 and one port of a module M3 are connected to each other (see a connection point C_{MM} shown in FIG. 8B). Similarly, the module M3 and a module M4 are connected to each other, and the module M4 and the optical fiber F2 are connected at another point.

In this way, a beam optical path extends in a "single-continuous-connected" manner as shown by a thick solid line in FIG. 8B. Using the single-continuous connection, multiple modules as monitoring targets can be monitored by one optical fiber.

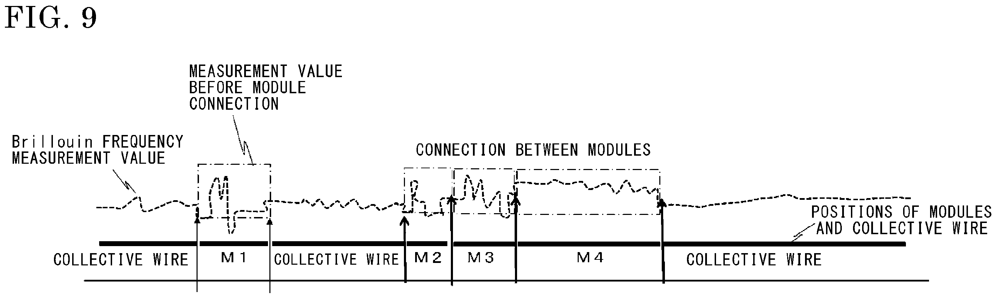

FIG. 9 shows an example of a measurement signal measured at each module in association with positions of the respective modules in a case of performing monitoring by one optical fiber connecting multiple modules in a single-continuous connection manner by the above joining method. In FIG. 9, measurement values of Brillouin frequencies indicated by a dotted curved line are shown in association with positions (indicated by a thick solid line) of the optical fiber collective wire (in FIG. 9, the optical fiber collective wire is abbreviated as "collective wire") and the respective modules denoted by M1 to M4.

As shown in FIG. 9, measurement values of Brillouin frequencies exhibit steps at the respective connection points. From the feature of a curve in each module, the module can be recognized through correlation analysis.

Then, by the method described above, the measurement values of Brillouin frequencies in time series are stored and analyzed, whereby aging and the like of multiple monitoring targets can be monitored by one optical fiber.

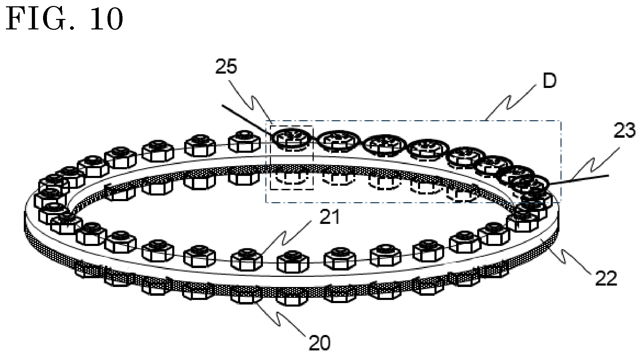

FIG. 10 shows a specific example in which one optical fiber connected in a single-continuous connection manner as described above is attached to nuts which are multiple hoop strain measurement modules. In FIG. 10, elliptic shapes connected by straight lines and straight line parts protruding from both of left and right ends in a rectangular frame D of an enclosing dotted-dashed line are an example of the single-continuous-connection monitoring optical fiber 33 (see FIG. 5) formed using the optical fiber 23.

Here, for convenience of description, the example in which the monitoring optical fiber 33 is provided in a single-continuous connection manner to only a plurality of nuts in the elliptic shapes, has been shown. However, without limitation to this example, the single-continuous-connection monitoring optical fiber 33 may be provided to almost all the nuts.

In FIG. 10, the case where only the fiber attachment fixing unit 25 indicated by a dotted-line rectangular frame is designated as a measurement target, has been shown. That is, the fixing units other than that indicated by the dotted line are not designated as measurement targets. Therefore, in this case, only a corresponding part of the measured signals may be selected.

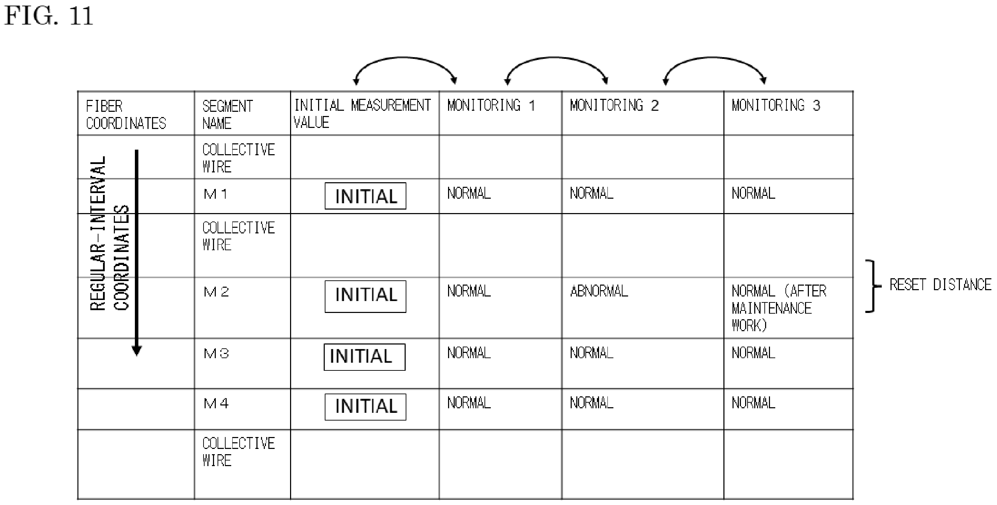

Next, one method for data management in a case of managing each module using the single-continuous-connection monitoring optical fiber as described above will be described with reference to FIG. 11.

In FIG. 11, physical quantities (e.g., hoop strain) of a plurality of modules (M1 to M4) as monitoring targets are managed as change amounts from initial values, and an example of a result obtained by determining whether the modules as monitoring targets are normal or abnormal on the basis of whether the change amounts are great or small, is shown.

In FIG. 11, the leftmost column indicates fiber coordinates represented by the axial-direction distance of the nut or the like, and here, regular-interval coordinates are assumed. The uppermost row indicates the names of management items such as a segment name of a management target, elapsed times, and the like. Here, monitoring 1 represents an elapsed time 1, monitoring 2 represents an elapsed time 2, monitoring 3 represents and elapsed time 3, and thus the elapsed time becomes longer as the number becomes larger.

In FIG. 11, it is indicated that the modules other than the module 2 (M2) are normal irrespective of the elapsed time but the module 2 is abnormal (e.g., loosening of the bolt axial force has occurred) at the time of monitoring 2.

Accordingly, the module 2 undergoes maintenance work (e.g., work of tightening to increase the axial force of the fixing unit) after the elapsed time 2 of the monitoring 2, and as a result, the module 2 is restored to a normal state at the time of the monitoring 3 (elapsed time 3). For the module 2, it is assumed that the maintenance work involves replacement of bolt and nut components, and the like, and therefore it is considered that setting for measurement positions, i.e., setting for coordinate distances of fiber coordinates, needs to be performed again.

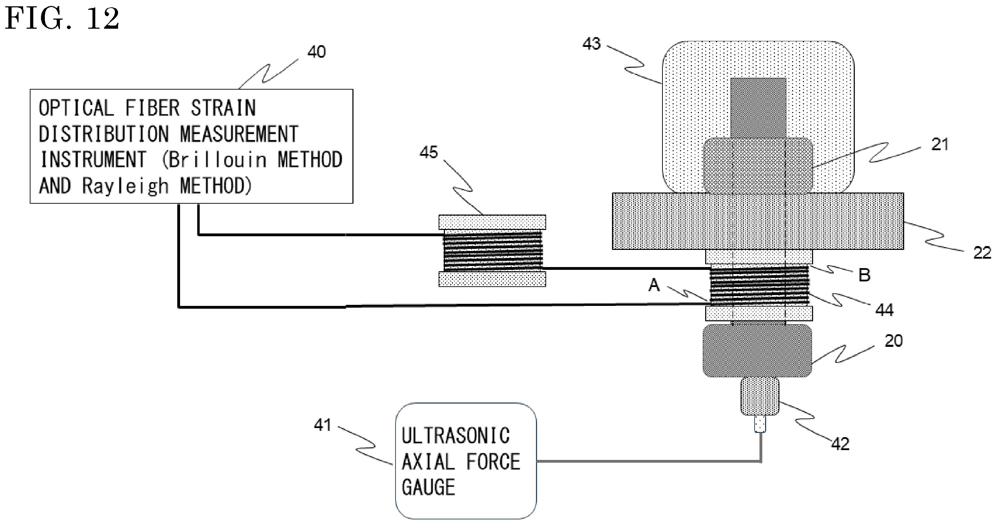

Next, the configuration of a testing device for measurement of a hoop strain distribution occurring in the nut in order to evaluate the axial force of the bolt which is a component of the fixing unit 2, conducted for determining the formation position of the groove of the fiber-attached nut shown in FIG. 3 and FIG. 4D will be described with reference to FIG. 12.

FIG. 12 shows the configuration of the testing device for measuring a hoop strain distribution occurring in the nut on the basis of the bolt axial force, in order to evaluate the bolt axial force in a case of fixing a target object (which may be referred to as a fixation target), in the optical fiber measurement device for monitoring bolt axial force according to Embodiment 1.

As shown in FIG. 12, this testing device includes an optical fiber strain distribution measurement instrument 40 which can perform measurement by both of a Brillouin method and a Rayleigh method. Using the optical fiber distribution measurement instrument of such a type makes it possible to measure change amounts of temperature and strain at the same time even in a case where the temperature and strain of a measurement target object to be measured are changed at the same time (see, for example, Patent Document 1). The optical fiber strain distribution measurement instrument 40 has a processor for computation and a memory for storing a measurement signal.

The reason why the optical fiber distribution measurement instrument involving both a Brillouin method and a Rayleigh method is used is that, in a case where a static cable is installed under the seabed at a water depth as shown in FIG. 1 described above, it might be necessary to consider not only deformation of the cable due to strain but also deformation of the cable due to temperature change, which influences a measurement signal, in terms of measurement accuracy.

As a method for confirming a corresponding part, temperature, deformation, or a vibration signal may be provided to the part, strain occurring in the optical fiber at that time may be measured by the optical fiber strain distribution measurement instrument 40, and the part may be confirmed by the measurement signal. That is, after the fiber attachment fixing unit has been provided at the fixation target, the position of the corresponding part can be confirmed at any time.

Here, as shown in FIG. 12, this testing device includes, as its components, an ultrasonic axial force gauge 41 for confirming and checking the bolt axial force, an ultrasonic transducer 42 for transmitting an ultrasonic signal from the ultrasonic axial force gauge 41 with as less attenuation as possible, a bolt tensioner 43 which can produce an axial force to the bolt with high accuracy, an optical fiber sensor-equipped nut 44 (here, the fiber length was about 10 m), a temperature compensation nut 45 (a nut with an optical fiber for temperature compensation wound around the outer circumference, as in the optical fiber sensor-equipped nut 44), and the like.

In the test, the nut 21 having a standard shape and the bolt 20 having a nominal diameter equivalent to that of the actually used one in the wind turbine, which are components of the fixing unit 2, are used at the same time. Here, also in FIG. 12, as in FIG. 3, a surface contacting with the fixation target 22 is referred to as a surface B (see "B" in FIG. 3), and a surface of the nut opposite to the surface B is referred to as a surface A.

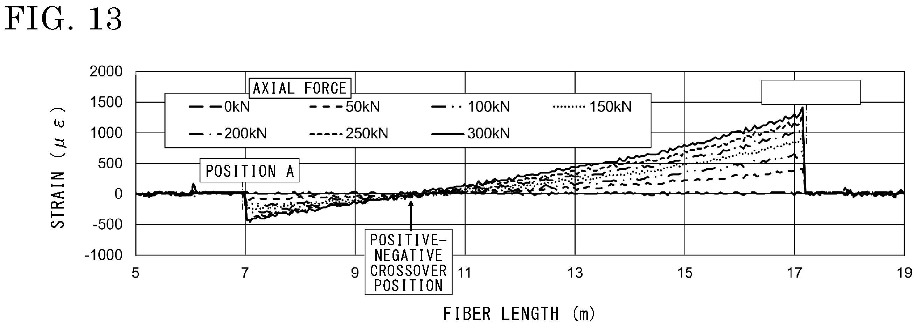

Next, a measurement result of measurement by this testing device will be sequentially described below with reference to FIG. 13 and FIG. 15 to FIG. 19. Here, FIG. 13 shows a hoop strain distribution detected by the optical fiber wound around the nut of this testing device, with the bolt axial force as a parameter. The horizontal axis indicates a distance (unit: m) along the optical fiber from a prescribed surface of the optical fiber, and the vertical axis indicates the value of hoop strain (unit: µε). In this test, the bolt axial force was changed from 0 to 300 kN (shown as a test condition parameter in FIG. 13).

As shown in FIG. 13, it is found that, under the same condition of the axial force, the value of strain on the B surface side is greater than the value of strain on the A surface side. In addition, there is a tendency in which, as the axial force increases, the strain change amount decreases. That is, strain occurring in the nut is not linear with respect to the axial force. However, it is found that a positive-negative crossover position (approximately a position of 10 m position in fiber length equivalent) of the strain value does not change even if the axial force is changed.

In this testing device, the optical fiber sensor-equipped nut 44 is wound with the optical fiber by a total of 72 turns (a length per turn is about 141 mm, and the resolution of a measurement instrument is set at not greater than the half of one turn).

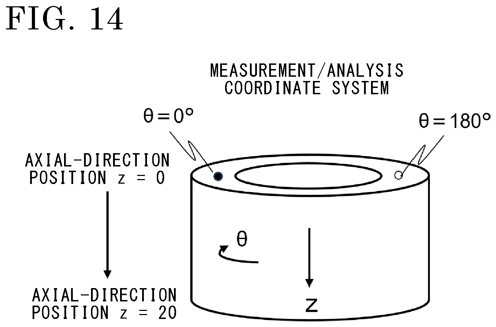

Next, the value of hoop strain measured by this testing device is compared with an analysis value based on an FEM analysis three-dimensional model. First, a coordinate system used in common between both values will be described with reference to FIG. 14.

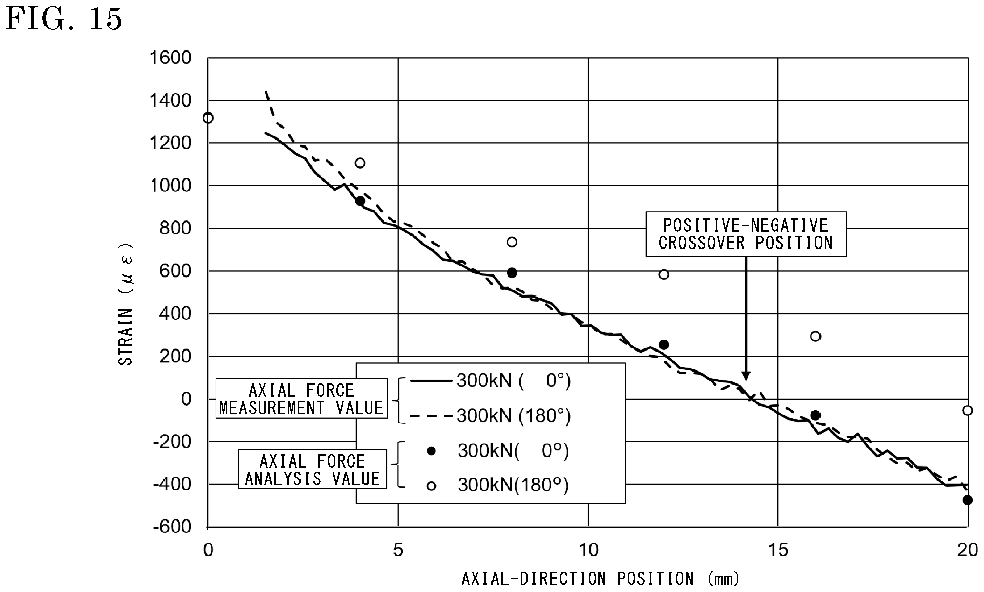

In FIG. 14, the axial-direction distance of the nut is indicated by a coordinate Z (unit: mm). Here, the range of Z to be compared was set to be 0 mm (corresponding to the B-surface position in FIG. 3) to 20 mm (corresponding to the A-surface position in FIG. 3). In addition, regarding a nut circumferential direction angle, a circumferential direction coordinate θ for comparing both values was defined. In this comparison, in particular, values at θ = 0° (see data indicated by filled circles in FIG. 15 below) and θ = 180° (see data indicated by blank circles in FIG. 15 below) are compared.

Next, with reference to FIG. 15, the value of hoop strain measured by this testing device and the value hoop strain calculated from the FEM analysis three-dimensional model are compared with each other. The horizontal axis indicates an axial-direction distance (Z described above; unit: mm). The vertical axis indicates the value of hoop strain (unit: µε).

FIG. 15 shows a result obtained by comparing a case where the nut circumferential direction angle θ was 0° (measurement values are indicated by a solid line) and a case where the nut circumferential direction angle θ was 180° (measurement values are indicated by a dotted line) as described above, while the axial force was set at 300 kN.

Here, the diameter of the optical fiber used in the test was 0.25 mm, and therefore a strain distribution in a case where the spatial resolution of hoop strain of the nut was 0.25 mm was successfully acquired for the first time. The feature thereof is that, irrespective of the axial force, hoop strain is positive (the nut is deformed to expand) at the contact end of the nut, hoop strain is negative (the nut is deformed to contract) at the free end of the nut, and the position of the point at which strain is zero (in FIG. 15, an axial-direction position of about 14 mm) does not change in an intermediate position.

In the present invention, a monitoring method for a bolt axial force has been developed by making use of the feature of the positive-negative hoop strain distribution described above or the position of zero strain. The feature of a hoop strain distribution of a nut changes depending on the size or the standard of the nut, but it is considered that the feature (the positive-negative distribution of hoop strain and strain zero position) does not change under the same nut size or shape, and values for individual measurement parts can be monitored as monitoring targets by actually measuring the values when the bolt axial force strain distribution measurement device is installed.

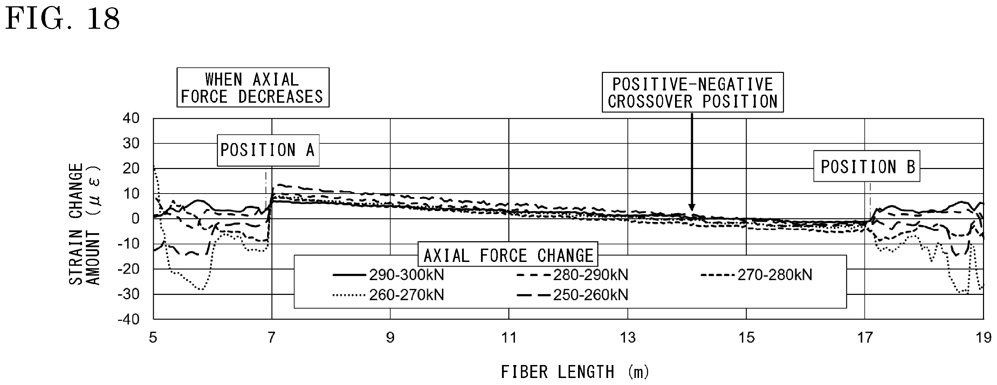

As described in description of FIG. 18 below, when the bolt axial force decreases, i.e., the bolt tightening force loosens, the above hoop strain distribution greatly changes, and the position of the zero point at which the graph crosses between positive and negative significantly changes as compared to the above case. The cause thereof is not clear but is considered to be due to change in the friction state.

Here, in order to estimate strain at specific positions, for values of Z, a result obtained by performing spline interpolation for measurement data based on 50 mm intervals is shown. The result of numerical analysis shown here is a result based on an FEM three-dimensional model. As shown in FIG. 15, it can be said that both values coincide with each other in terms of order.

From the results shown in FIG. 13 and FIG. 15 described above, it has been found that, in a case where a fixing unit is formed using a nut which has a standard shape and is a standard product as shown in FIG. 4A, the magnitude of strain becomes uneven among axial-direction positions of the nut, and as a result, a part subjected to a load greater than the rated value might appear at a specific position in the axial direction of the nut or the bolt, and such a part is on the surface side where the nut contacts with the fixation target when being fixed. Such unevenness of strain can become a cause for cracking in the bolt shaft and therefore confirmation by inspection or the like is needed.

In other words, the above-described fact is estimated to be a cause for loosening, bending fracture, or the like of the bolt. Therefore, in order to make improvement from this state, using a nut of which the outer circumference shape is a special shape changed from a standard shape as a component of the fixing unit in the wind turbine is also proposed. Specifically, the nuts having the special shapes shown in FIG. 4B and FIG. 4C are proposed first.

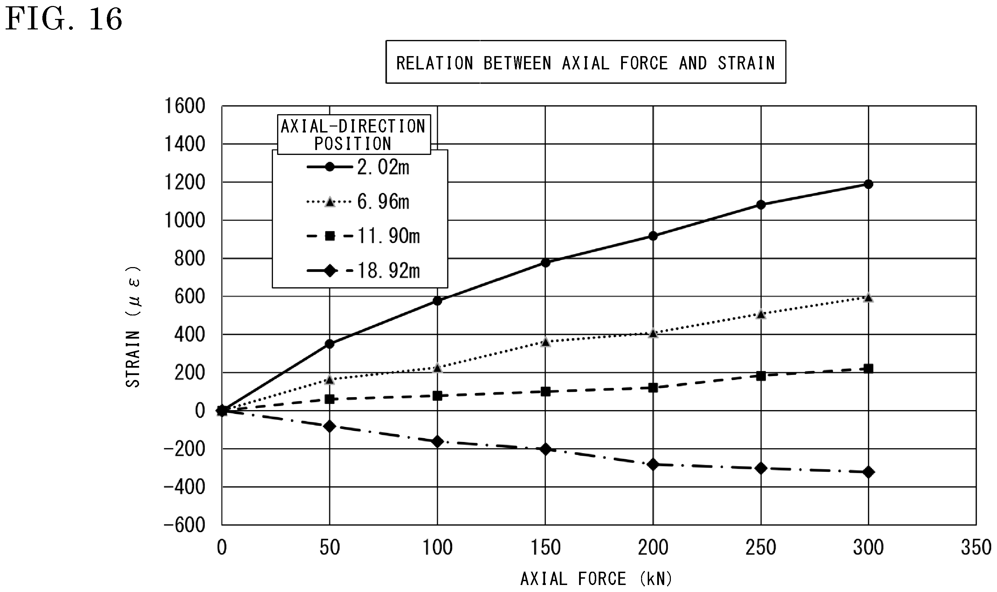

An object of the present invention is to monitor loosening of a bolt axial force in wind turbine equipment or the like through measurement of hoop strain. Therefore, next, in order to calculate a relationship between the bolt axial force and hoop strain, measurement is performed while changing the measurement position (here, the axial-direction position of the nut), and the measurement result is sorted and shown in FIG. 16.

FIG. 16 shows a relationship between the bolt axial force and hoop strain calculated at, in particular, a position of 0° which is an initial angle position in the circumferential direction. Here, in order to estimate hoop strain at specific positions, a result obtained by performing spline interpolation for measurement data based on 50 mm intervals is shown. Also for an angle position of 180°, values as for the position of 0° were measured.

First, also in FIG. 16, it is found that, irrespective of the bolt axial force, the value of hoop strain that occurs greatly changes depending on the axial-direction position of the nut. Then, it is found that, at a position closer to the fixation target from the surface of the nut, i.e., at a part where the value of the axial-direction position of the nut is smaller, the value of hoop strain that occurs is greater. In other words, it is found that sensitivity of measurement is higher when measurement is performed at such a position.

In addition, it is found that strain occurring in the nut is not linear with respect to the bolt axial force, and that, as the axial force increases, the hoop strain change amount decreases. Further, as described above, there was almost no difference in measurement values depending on difference in measurement positions in the circumferential direction.

Positive values of hoop strain (in the graph, measurement values at axial-direction positions of 2.02 m, 6.96 m, and 11.90 m) mean that the outer circumference of the nut is deformed to expand, and negative values of hoop strain (in the graph, measurement values at an axial-direction position of 18.92 m) mean that the outer circumference of the nut is deformed to contract.

Next, a relationship between the change amount of the bolt axial force and the change amount of strain was examined. First, regarding a case where the bolt axial force increases, the change amounts of the fiber length (measurement position) and hoop strain when the bolt axial force was changed with the change amount thereof set at 50 kN were measured.

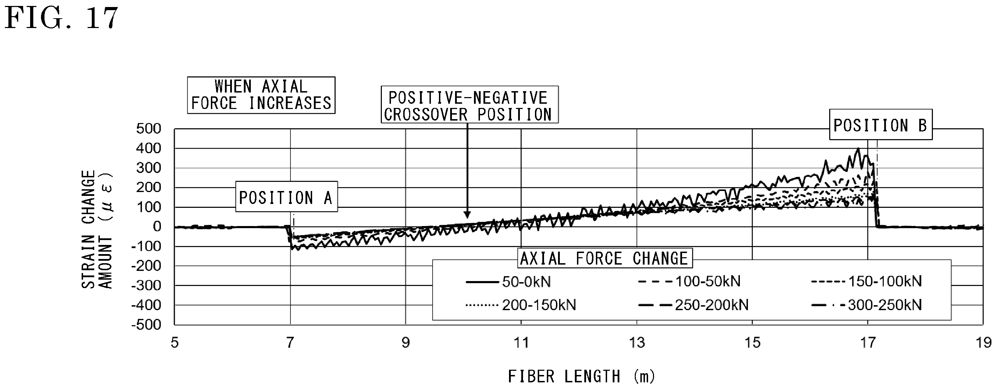

In addition, since it has been found that detection of loosening of the bolt is important, in order to confirm how small the change of the bolt axial force can cause strain, the change amounts of the fiber length (measurement position) and hoop strain when the change amount of the bolt axial force was set at 10 kN and 5 kN were measured. The results of these measurements will be described below with reference to FIG. 17 to FIG. 19.

First, FIG. 17 shows a result of measurement of the hoop strain change amount in a case of increasing the bolt axial force. In this case, a value in the change range of the bolt axial force when the change amount in decrease of the bolt axial force was set at a constant value of 50 kN was used as a parameter, and the change range of the parameter of change of the axial force was set at six stages from a range of 0 to 50 kN to a range of 250 to 300 kN.

In this case, it is found that the strain change amount at the position B is greater than the strain change amount at the position A. In addition, it is found that the positive-negative crossover position of the strain value is a position where the fiber length is about 10 m.

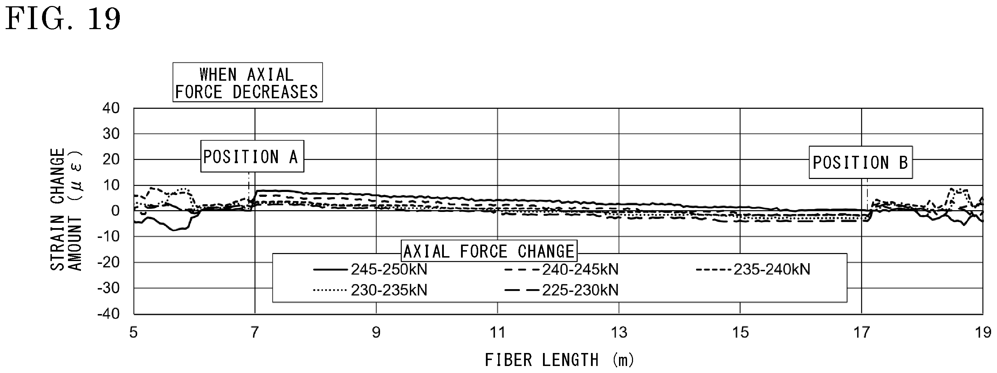

Next, results of measurement of the strain change amount in a case of decreasing the bolt axial force will be described with reference to FIG. 18 and FIG. 19.

In FIG. 18, a distribution of hoop strain change amounts detected by the optical fiber wound around the nut of this testing device is shown with a parameter being a value in the change range of the bolt axial force in a case where the change amount in decrease of the bolt axial force was set at a constant value of 10 kN. In this test, as the change range of the parameter of change of the axial force, a range of 290 to 300 kN to a range of 250 to 260 kN were set (also in FIG. 18, these ranges are shown as the parameter of change of the axial force). Here, the strain change amount on the vertical axis is set in a range of -40 µε to 40 µε. Setting of the horizontal axis in FIG. 18 is the same as that in FIG. 13 and therefore the description thereof is omitted here.

FIG. 19 shows another example of measurement of the strain change amount in a case of decreasing the bolt axial force, measured by this testing device.

In FIG. 19, a distribution of hoop strain change amounts detected by the optical fiber wound around the nut of this testing device is shown with a parameter being a value in the change range of the bolt axial force in a case where the change amount in decrease of the bolt axial force was set at a constant value of 5 kN.

In this test, as the change range of the parameter of change of the axial force, a range of 245 to 250 kN to a range of 225 to 230 kN were set (also in FIG. 19, these ranges are shown as the parameter of change of the axial force).

Setting of the horizontal axis and the vertical axis in FIG. 19 are the same as those in FIG. 18 and therefore the description thereof is omitted here.

As shown in FIG. 18 and FIG. 19, it is found that the hoop strain change amount at the position B (see the surface B in FIG. 12) when the axial force was decreased is smaller than the value at the position A (see the surface A in FIG. 12).

From FIG. 18, it is found that the positive-negative crossover position of strain is at a fiber length of about 14 m irrespective of the parameter of change of the axial force. This position is greatly different from the position when the axial force was increased. This suggests that there is a difference in frictional force occurring between the nut and the bolt with respect to the axial force.

In FIG. 18 and FIG. 19, it seems that the change amount of hoop strain when the axial force was changed is associated with the change range (the magnitude thereof) of the axial force. Thus, detection accuracy for change in the axial force is estimated to be approximately 5 kN to 10 kN.

### Embodiment 3

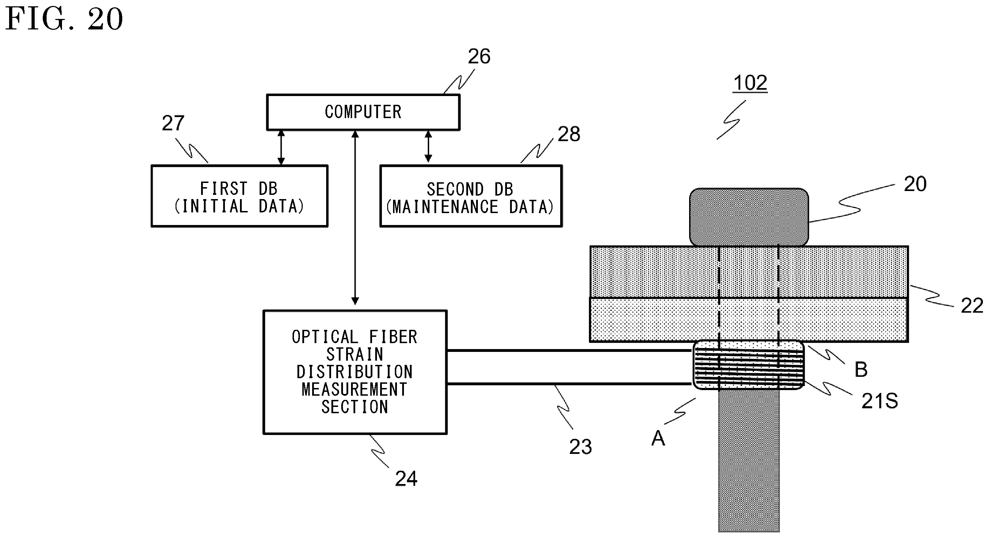

In Embodiments 1 and 2, the system for making improvement in loosening of the bolt or the like by using the fiber-attached nut as a component of the fixing unit, has been proposed. Meanwhile, an optical fiber measurement system for monitoring bolt axial force 102 according to Embodiment 3 can realize maintenance and monitoring of the bolt axial force with higher accuracy and reliability as compared to conventional maintenance and inspection. Hereinafter, this system will be described with reference to FIG. 20.

In FIG. 20, the fixation target 22 is fixed by the bolt 20 and the fiber-attached nut 21S shown in FIG. 3 above. The optical fiber 23 for measuring hoop strain is wound around the outer circumference of the nut 21S. A signal due to strain occurring in the nut is detected by the optical fiber 23 and analyzed by the optical fiber strain distribution measurement section 24, whereby a strain distribution and the like are calculated.

Here, at the time of initial setting when the fixation target is fixed by the bolt 20 and the fiber-attached nut 21S, data such as a strain distribution detected by the optical fiber 23 and analyzed by the optical fiber strain distribution measurement section 24 is transmitted to a computer 26 which has a processor and a memory and which performs calculation processing on input data and outputs a result. As necessary, the data undergoes calculation or the like, and then is stored and saved as initial data of the strain distribution and the like into a first database (hereinafter, abbreviated as first DB).

Here, axial forces having various magnitudes designated by the computer 26 are applied to the bolt 20 by the bolt tensioner and the like (not shown), and data obtained while the axial force is changed as a parameter are arranged as a function of the bolt axial force and then stored into the first database.

Besides, when each of a plurality of certain periods has elapsed since the initial setting ordered by the computer 26, values of hoop strain at positions in the axial direction of the fiber-attached nut 21S, measured by the optical fiber strain distribution measurement section 24, are stored and saved into a second database (hereinafter, abbreviated as a second DB).

Here, on the basis of the existing maintenance standard, the plurality of certain periods are set to be shorter than a period of periodic inspection prescribed in the existing maintenance standard and are stored and saved into the second database. Data regarding the plurality of certain periods is called by the computer at the time of measuring hoop strain at positions in the axial direction of each nut, and is used in strain measurement.

Then, on the basis of data of hoop strain at positions in the axial direction of each nut measured when each of the plurality of certain periods has elapsed, and stored in the second database, the data are sorted as separate hoop strain data for respective nut shapes at the time of periodic inspection prescribed in the existing maintenance standard, and estimate values at the time of periodic inspection are calculated by the computer 26. The estimate values are stored and saved as maintenance data into the second database, and are used as data to be referred to at the time of periodic inspection.

Further, for each predetermined elapsed time, hoop strain occurring in the fiber-attached nut 21S is measured by the optical fiber strain distribution measurement section, and then is stored into the measurement section and the computer, as actual measurement data associated with the elapsed time. Then, by the computer, the stored actual measurement data is compared with initial data stored in the first database or with maintenance data stored in the second database, whereby a maintenance plan for the fixing unit can be created.

Although the invention is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the invention.

It is therefore understood that numerous modifications which have not been exemplified can be devised without departing from the scope of the present invention. For example, at least one of the constituent components may be modified, added, or eliminated. At least one of the constituent components mentioned in at least one of the preferred embodiments may be selected and combined with the constituent components mentioned in another preferred embodiment. For example, the above description has been given under the assumption that the optical fiber has one core, but without limitation thereto, the same effects are obtained also in a case of using multiple cores not less than two cores.

### DESCRIPTION OF THE REFERENCE CHARACTERS

1 wind turbine
2 fixing unit
3 floating connection portion
4 buoy
5 dynamic cable
6 cable connection portion
7 floating substation
8 static cable
9 measurement instrument station
15 blade
16 hub
17 nacelle
18 tower
20 bolt
21, 21a, 21b, 21c nut
21S, 21Sa fiber-attached nut
22 fixation target (joining portion)
23 optical fiber (axial force monitoring optical fiber)
24 optical fiber strain distribution measurement section
25 fiber attachment fixing unit
30 monitoring control and management system
31 optical switch
32 power transmission line-included optical fiber
33 single-continuous-connection monitoring optical fiber
34 flexible optical fiber cable
35 bedplate nacelle
36 rotary joint
37 blade monitoring optical fiber
40 optical fiber strain distribution measurement instrument
41 ultrasonic axial force gauge
42 ultrasonic transducer
43 bolt tensioner
44 optical fiber sensor-equipped nut
45 temperature compensation nut
50 power cable
51 power transmission cable
52 armor wire
53 optical fiber collective wire
100 optical fiber measurement device for monitoring bolt axial force
101, 102 optical fiber measurement system for monitoring bolt axial force
M1, M2, M3, M4 module

## Claims

1. An optical fiber measurement device for monitoring bolt axial force, configured to fix a fixation target by a fixing unit composed of a plurality of sets of bolts and nuts, and monitor a bolt axial force occurring in the bolt using an optical fiber, the optical fiber measurement device comprising:
an optical fiber to be used for measuring strain of a measurement target;
a fiber attachment fixing unit configured such that the nut of at least one set among the plurality of sets of bolts and nuts has a shape changed so as to allow the optical fiber to be attached to an outer circumferential part of the nut, and the optical fiber is attached to the nut, thus forming a fiber-attached nut; and
an optical fiber strain distribution measurement section which measures a hoop strain distribution of the fiber-attached nut occurring due to an axial force of the bolt, along the optical fiber attached to an outer circumferential surface of the fiber-attached nut, wherein
hoop strain and the hoop strain distribution of the fiber-attached nut are measured by the optical fiber strain distribution measurement section in advance, and the optical fiber is attached at a predetermined position in an axial direction of the fiber-attached nut in accordance with a value of the hoop strain or the hoop strain distribution measured in advance, to monitor the bolt axial force.

2. The optical fiber measurement device for monitoring bolt axial force according to claim 1, wherein
the optical fiber is attached at a predetermined axial-direction position of the fiber-attached nut in accordance with the hoop strain distribution measured in advance, the hoop strain distribution is measured by the optical fiber strain distribution measurement section, a position where strain values of the hoop strain distribution cross between positive and negative, and the bolt axial force is monitored on the basis of a change amount of the position where the strain values cross between positive and negative.

3. The optical fiber measurement device for monitoring bolt axial force according to claim 1 or 2, wherein
a shape of the nut with the optical fiber attached thereto in the fiber-attached nut is a cylindrical shape, and the predetermined position in the axial direction at which the optical fiber is attached to the fiber-attached nut is set on a surface side where the fixation target is fixed, of upper and lower surfaces in the axial direction of the fiber-attached nut.

4. The optical fiber measurement device for monitoring bolt axial force according to any one of claims 1 to 3, wherein
the optical fiber is arranged and attached to the fixing unit in such a manner as to collectively measure bolt axial forces occurring in the bolts of the fixing unit making fixation by the plurality of sets of the bolts and the fiber-attached nuts.

5. An optical fiber measurement system for monitoring bolt axial force, configured to fix a fixation target by a fixing unit composed of a plurality of sets of bolts and nuts, and monitor a bolt axial force occurring in the bolt using an optical fiber, the optical fiber measurement system comprising:
an optical fiber to be used for measuring strain of a measurement target;
a fiber attachment fixing unit configured such that the nut of at least one set among the plurality of sets of bolts and nuts has a shape changed so as to allow the optical fiber to be attached to an outer circumferential part of the nut, and the optical fiber is attached to the nut, thus forming a fiber-attached nut;
an optical fiber strain distribution measurement section which measures a hoop strain distribution in an axial direction of the fiber-attached nut occurring due to an axial force of the bolt, along the optical fiber attached to an outer circumferential surface of the fiber-attached nut;
an optical fiber collective wire having therein two or more said optical fibers and provided at an outer circumferential surface part in a power cable for transmitting power; and
a dual-port module configured to be identified with an ID and store physical quantities measured by a Rayleigh method and a Brillouin method using the optical fibers provided to the optical fiber collective wire, wherein
the optical fiber of the optical fiber collective wire is taken out and connected to two different parts of the dual-port module, hoop strain and a hoop strain distribution of the fiber-attached nut are measured by the optical fiber strain distribution measurement section in advance, and the measured data is stored in the dual-port module, and
the optical fiber is attached at a predetermined axial-direction position of the fiber-attached nut in accordance with a value of the hoop strain or the hoop strain distribution stored in the dual-port module, to monitor the bolt axial force.

6. The optical fiber measurement system for monitoring bolt axial force according to claim 5, further comprising:
a bolt axial force monitoring structure module in which the fiber-attached nuts are provided for all the bolts of the fixing unit composed of the plurality of sets of bolts and nuts, and bolt axial forces are applied to tighten the fixation target;
a computer which has a processor and a memory, performs calculation processing on input data, and outputs a result;
a bolt tensioner which enables the bolt axial force of the bolt axial force monitoring structure module to be set at predetermined values at a time of initial setting when the fixation target is fixed;
a first database configured to store, as initial data, measured data obtained by the optical fiber strain distribution measurement section measuring hoop strain at positions in the axial direction of each fiber-attached nut occurring with respect to the bolt axial force while the bolt axial force is changed as a parameter in a predetermined range; and
a second database configured to store, as maintenance data, measured data obtained by measuring, for a plurality of certain periods, values of hoop strain at positions in the axial direction of the fiber-attached nut after each of the certain periods has elapsed since the time of initial setting, the certain periods being, on the basis of an existing maintenance standard, set to be shorter than a period of periodic inspection prescribed in the maintenance standard, wherein
for each predetermined elapsed time, hoop strain occurring in the nut is measured by the optical fiber strain distribution measurement section, and stored in the optical fiber strain distribution measurement section and the computer, as actual measurement data associated with the elapsed time, and
a maximum axial force of each fiber-attached nut calculated from the actual measurement data stored in the computer is compared with a maximum axial force of each corresponding fiber-attached nut among the initial data stored in the first database, or with a maximum axial force of each corresponding fiber-attached nut calculated from the maintenance data stored in the second database and obtained after the certain period has elapsed, to monitor the fixing unit.

7. The optical fiber measurement system for monitoring bolt axial force according to claim 5 or 6, wherein
the fixation target is a component of a floating offshore wind power site installed on the ocean, and the optical fiber strain distribution measurement section is installed at a long-distance location far from the floating offshore wind power site by a distance of 10 km or more.
